# EUROPEAN PATENT APPLICATION

(11) **EP 4 106 428 A1**
(43) Date of publication of application: **21.12.2022**
(21) Application number: 20918835.8
(22) Date of filing: 13.02.2020
(51) Int. Cl.: H04W 72/02, H04W 72/04, H04W 74/08

(54) **TERMINAL AND BASE STATION**

(71) Applicant: NTT DOCOMO, INC., Chiyoda-Ku Tokyo 100-6150 (JP)
(72) Inventor: OHARA, Tomoya, Tokyo 100-6150 (JP); TAKEDA, Daiki, Tokyo 100-6150 (JP); KUMAGAI, Shinya, Tokyo 100-6150 (JP)
(74) Representative: Hoffmann Eitle
(86) International application number: PCT/JP2020/005672
(87) International publication number: WO 2021/161485

(57) **Abstract**

A terminal includes a control unit that selects a transmission occasion to transmit a random access preamble and that configures a frequency bandwidth used for transmission or reception by the terminal by using a start position of a frequency bandwidth of the selected transmission occasion or a center position of the frequency bandwidth of the selected transmission occasion as a reference, so that the random access preamble is to be transmitted in the frequency bandwidth of the transmission occasion; and a transmission unit that transmits the random access preamble based on the frequency bandwidth configured by the control unit.

## Description

### TECHNICAL FIELD

The present invention relates to a terminal and a base station in a radio communication system.

### BACKGROUND ART

In the Third Generation Partnership Project (3GPP) standardization, a new device type with lower cost and lower complexity than enhanced mobile broadband (eMBB)/Ultra-Reliable and Low Latency Communications (URLLC) devices is being studied as reduced capability NR devices (which may be referred to as an NR-light UE).

A reduced capability NR device (hereinafter referred to as a reduced capability terminal 10) is a device whose capability falls between those of eMBB/URLLC devices and those of Low Power Wide Area (LPWA), LTE-M/NB-IoT devices.

### Related Art Document

### [Non-Patent Document]

Non-Patent Document 1: 3GPP TS 38.211 V16.0.0 (2019-12)

### SUMMARY OF THE INVENTION

### [PROBLEM TO BE SOLVED BY THE INVENTION]

As examples of functions of a reduced capacity terminal, for example, UE Bandwidth reduction (a function to reduce a bandwidth supported by a terminal to be narrower than a bandwidth supported by a normal NR device), reduced number of UE RX/TX antennas (a function to reduce the number of antennas supported by a terminal to be less than the number of antennas supported by a normal NR device), Half-Duplex-FDD, Relaxed UP processing time, and Relaxed UE processing capability have been studied.

There is a need for a technique that allows a terminal to appropriately configure a frequency bandwidth used for transmission or reception by the terminal, so that a random access preamble can be appropriately transmitted even if the bandwidth supported the terminal is reduced.

### [MEANS FOR SOLVING THE PROBLEM]

According to an aspect of the present invention, there is provided a terminal including a control unit that selects a transmission occasion to transmit a random access preamble and that configures a frequency bandwidth used for transmission or reception by the terminal by using a start position of a frequency bandwidth of the selected transmission occasion or a center position of the frequency bandwidth of the selected transmission occasion as a reference, so that the random access preamble is to be transmitted in the frequency bandwidth of the transmission occasion; and a transmission unit that transmits the random access preamble based on the frequency bandwidth configured by the control unit.

### [ADVANTAGE OF THE INVENTION]

According to an embodiment, a technique is provided that allows a terminal to appropriately configure a frequency bandwidth used for transmission or reception by the terminal, so that a random access preamble can be appropriately transmitted, even if the bandwidth supported by the terminal is reduced.

### BRIEF DESCRIPTION OF DRAWINGS

Fig. 1 is a configuration diagram of a communication system in an embodiment.
Fig. 2 is a diagram illustrating an example of a table that specifies a width of a frequency resource of an NR PRACH.
Fig. 3 is a diagram illustrating an example in which RACH occasions are frequency division multiplexed.
Fig. 4 is a diagram illustrating an example of a positional relationship between a reduced bandwidth of a reduced capability terminal and multiple ROs that are frequency division multiplexed.
Fig. 5 is a diagram illustrating an example in which the reduced capability terminal configures a UL BWP based on a position of a frequency bandwidth of a selected RO.
Fig. 6 is a diagram illustrating an example in which the reduced capability terminal configures a UL BWP while using a center position of a frequency bandwidth of a selected RO as a reference.
Fig. 7 is a diagram illustrating an example in which the reduced capability terminal configures a UL BWP while using a start position of a frequency bandwidth of a selected RO as a reference.
Fig. 8 is a diagram illustrating an example in which each terminal from among a plurality of reduced capability terminals configures a UL BWP based on a position of a frequency bandwidth of a RACH occasion selected for transmitting a random access preamble.
Fig. 9 is a diagram illustrating another example in which each terminal from among a plurality of reduced capability terminals configures a UL BWP based on a position of a frequency bandwidth of a RACH occasion selected for transmitting a random access preamble.
Fig. 10 is a diagram illustrating an example in which the reduced capability terminal retransmits a random access preamble.
Fig. 11 is a diagram illustrating an example of a frequency bandwidth configured in accordance with a new BWP.
FIG. 12 is a diagram illustrating an example of a functional configuration of a terminal.
FIG. 13 is a diagram illustrating an example of a functional configuration of a base station.
FIG. 14 is a diagram illustrating an example of a hardware configuration of the terminal and the base station.

### [EMBODIMENTS OF THE INVENTION]

Hereinafter, an embodiment of the invention will be described with reference to the accompanying drawings. Note that, the following embodiment is illustrative only, and embodiments to which the invention is applied are not limited to the following embodiments.

It is assumed that a radio communication system in the following embodiments basically conform to NR, but this is merely an example, and the radio communication system in the embodiments may partially or entirely conform to a radio communication system (for example, LTE) other than the NR.

### (Overall System Configuration)

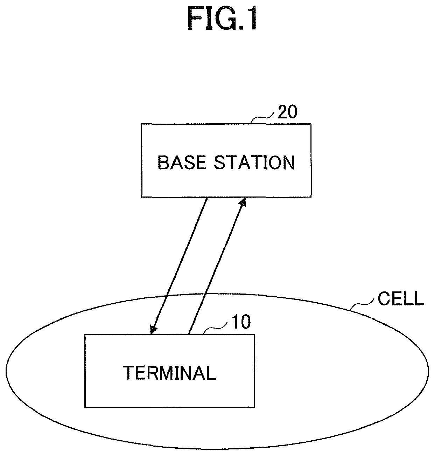

Fig. 1 illustrates a configuration diagram of the radio communication system according to the embodiments. As illustrated in Fig. 1, the radio communication system according to the embodiments includes a terminal 10 and a base station 20. In Fig. 1, one piece of the terminal 10 and one piece of the base station 20 are illustrated, but this is an example, and a plurality of the terminals 10 and a plurality of the base stations 20 may be provided.

The terminal 10 is a communication device such as a smart phone, a portable telephone, a tablet, a wearable terminal, and a communication module for machine-to-machine (M2M) which have a radio communication function. The terminal 10 receives a control signal or data from the base station 20 in downlink (DL), and transmits the control signal or the data to the base station 20 in uplink (UL) to use various communication services provided by the radio communication system. For example, a channel transmitted from the terminal 10 includes a physical uplink control channel (PUCCH) and a physical uplink shared channel (PUSCH). In addition, the terminal 10 may be referred to as a UE, and the base station 20 may be referred to as a gNB.

In the embodiments, a duplex method may be a time division duplex (TDD) method or a frequency division duplex (FDD) method.

In the embodiments of the present invention, "configure" or "specify" a radio parameter or the like may mean that a predetermined value is pre-configured in the base station 20 or the terminal 10, that a predetermined value is expected to be pre-configured in the base station 20 or the terminal 10, or that a radio parameter transmitted from the base station 20 or the terminal 10 is configured.

The base station 20 is a communication device that provides one or more cells and that performs radio communication with the terminal 10. Physical resources of a radio signal are defined in a time domain and a frequency domain, the time domain may be defined by a number of OFDM symbols, and the frequency domain may be defined by a number of sub-carriers or a number of resource blocks. The base station 20 transmits synchronization signals and system information to the terminal 10. The synchronization signals are, for example, NR-PSS and NR-SSS. A part of the system information is transmitted, for example, by NR-PBCH, and is also called broadcast information. The synchronization signal and broadcast information may be periodically transmitted as an SS block (SS/PBCH block) formed of a predetermined number of OFDM symbols. For example, the base station 20 transmits a control signal or data in Downlink (DL) to the terminal 10 and receives a control signal or data in Uplink (UL) from the terminal 10. Both the base station 20 and the terminal 10 are capable of beam forming to transmit and receive signals. For example, a reference signal transmitted from the base station 20 includes a Channel State Information Reference Signal (CSI-RS) and a channel transmitted from the base station 20 includes a Physical Downlink Control Channel (PDCCH) and a Physical Downlink Shared Channel (PDSCH).

### (Multi-numerology)

In order to support a wide range of frequencies and use cases in 5G, it is necessary to support multiple numerologies (radio parameters such as a subcarrier spacing and a symbol length). Accordingly, it is effective to design variable parameters in a scalable manner on the basis of LTE numerology. Based on this idea, Multi-Numerology of NR has been introduced. Specifically, the reference subcarrier spacing is the same as the LTE subcarrier spacing, and is set to 15 kHz. Other subcarrier spacings are defined by multiplying the reference subcarrier spacing by a power of 2. A plurality of subcarrier spacing configurations µ are defined. Specifically, for µ = 0, the subcarrier spacing Δf = 15 kHz and Cyclic prefix = Normal may be specified; for µ = 1, the subcarrier spacing Δf = 30 kHz and Cyclic prefix = Normal may be specified; for µ = 2, the subcarrier spacing Δf = 60 kHz and Cyclic prefix = Normal or Extended may be specified; for µ = 3, the subcarrier spacing Δf = 120 kHz and Cylic prefix = Normal may be specified; and for µ = 4, the subcarrier spacing Δf = 240 kHz and Cyclic prefix = Normal may be specified.

The number of OFDM symbols included in one slot is set to 14 for any of the subcarrier spacing configurations µ = 0, 1, 2, 3, and 4. However, for the subcarrier spacing configurations µ = 0, 1, 2, 3, and 4, the number of slots included in one frame is set to 10, 20, 40, 80, and 160, and the number of slots included in one sub-frame is set to 1, 2, 4, 8, and 16. Here, since the frame length is 10 ms, for the subcarrier spacing configurations µ = 0, 1, 2, 3, and 4, the slot lengths are set to 1 ms, 0.5 ms, 0.25 ms, 0.125 ms, and 0.625 ms. Since the number of OFDM symbols included in one slot is set to 14 for any of the subcarrier spacing configurations µ = 0, 1, 2, 3, and 4, the OFDM symbol lengths differ for every subcarrier spacing configurations. For the subcarrier spacing configurations µ = 0, 1, 2, 3, and 4, the OFDM symbol lengths are set to (1/14) ms, (0.5/14) ms, (0.25/14) ms, (0.125/14) ms and (0.0625/14) ms. As described above, by shortening the slot length and the OFDM symbol length, low-latency communication can be achieved. For example, the base station 20 can configure the subcarrier spacing for the terminal 10 by specifying any of µ = 0, 1, 2, 3, and 4 in a subcarrier spacing that is a parameter of an information element BWP.

In the Third Generation Partnership Project (3GPP) standardization, a new device type with lower cost and lower complexity than those of enhanced mobile broadband (eMBB)/Ultra-Reliable and Low Latency Communications (URLLC) devices is being studied as a reduced capability NR device (which may be referred to as an NR-light UE).

Reduced Capability NR devices (which will be referred to as a reduced capability terminal 10, hereinafter) are expected to be devices whose capability falls between those of eMBB/URLLC devices and those of Low Power Wide Area (LPWA), LTE-M/NB-IoT devices.

In the reduced capability terminal 10, examples of characteristic elements may include a compact form factor and a long battery life.

As examples of functions of the reduced capability terminal 10, UE bandwidth reduction (a function to configure a bandwidth supported by the terminal 10 to be narrower than the bandwidth supported by a standard NR device), reduced number of UE RX/TX antennas (a function to reduce the number of antennas supported by the terminal 10 to be less than the number of antennas supported by the standard NR device), Half-Duplex-FDD, Relaxed UP processing time, Relaxed UE processing capability, and the like have been studied.

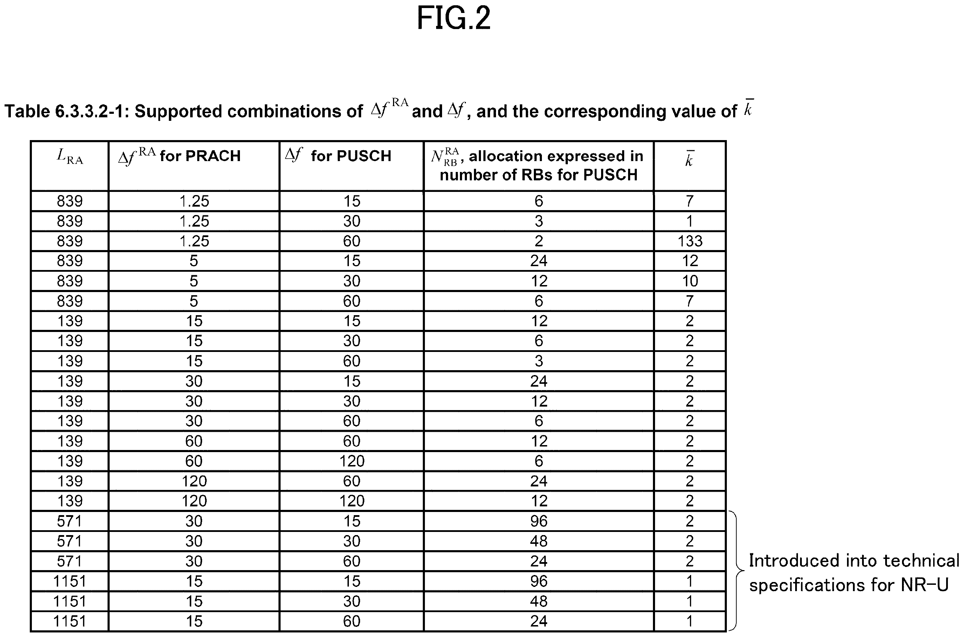

Fig. 2 is a diagram illustrating an example of a table for specifying a width of a frequency resource of an NR Physical Random Access Channel (PRACH). As illustrated in the example of Fig. 2, the width of the frequency resource of the NR PRACH is determined by a combination of subcarrier spacing (SCS) of the PRACH (Δf^{RA} for PRACH), SCS of PUSCH (Δf for PUSCH), and a sequence length of PRACH (*L_{RA}*). The width of the frequency resource of the NR PRACH is calculated as the number of resource blocks calculated from the SCS of the PUSCH. In the example of Fig. 2, the width of the frequency resource of the NR PRACH is any of 2 RBs, 3 RBs, 6 RBs, 12 RBs, and 24 RBs.

In the example of Fig. 2, as a result of the addition of the technical specification for NR-U (unlicensed band), 48 RBs and 96 RBs can be selected as the width of the frequency resource of the NR PRACH. However, the 48 RBs and 96 RBs added to the NR-U may be available only during NR-U operation, or may be available regardless of NR-U operation/normal NR operation.

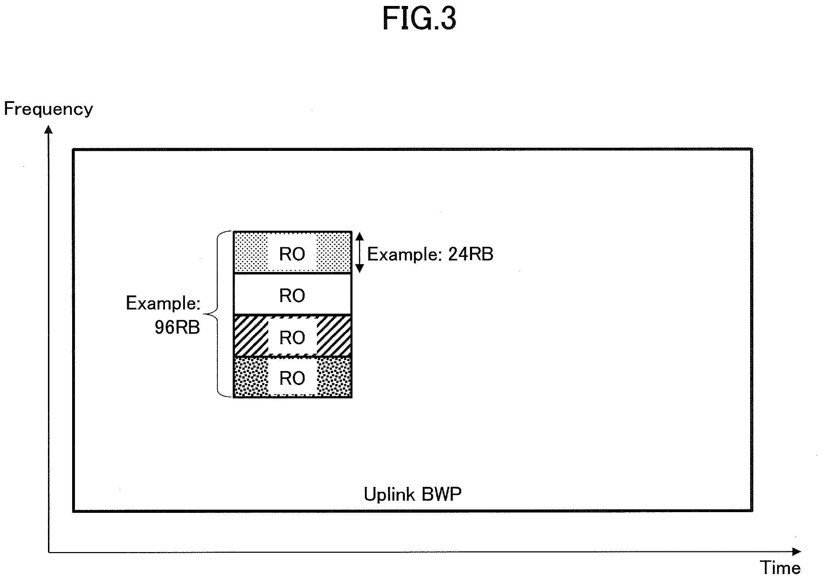

Fig. 3 is a diagram illustrating an example of frequency division multiplexing (FDM) of RACH occasions (ROs). As illustrated in the example of Fig. 3, on the NR PRACH, multiple ROs (up to eight ROs) can be frequency division multiplexed. In a single random access preamble transmission, the terminal 10 transmits the random access preamble by selecting any one of the frequency multiplexed plurality of ROs. Here, prior to the random access preamble transmission, an uplink Bandwidth Part (BWP) may be configured, for example, by using broadcast information, and the plurality of FDMed ROs may be allocated within the frequency bandwidth of the BWP.

### (Problem)

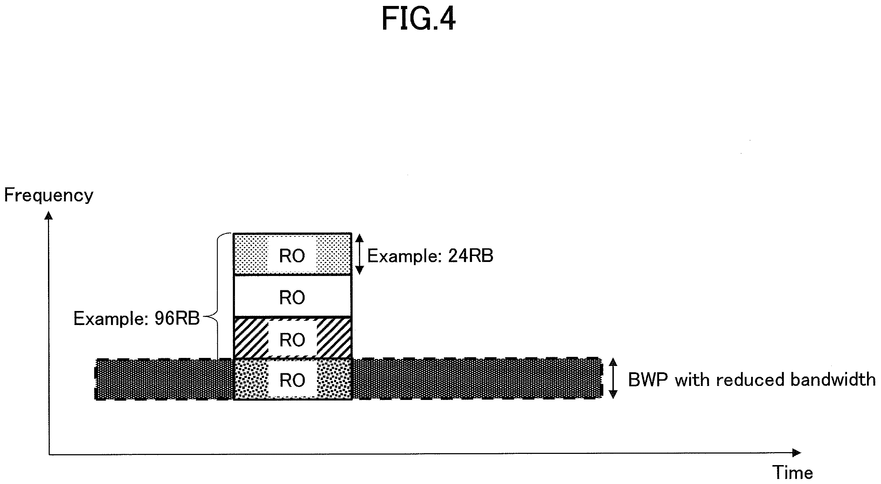

Fig. 4 is a diagram illustrating an example of the positional relationship between the reduced bandwidth of the reduced capability terminal 10 and a plurality of frequency multiplexed ROs. For example, depending on the relationship between the bandwidth of the RO and the reduced bandwidth of the terminal 10, it may be unable to allocate to the terminal 10 the frequency bandwidth used for transmission or reception by the terminal so that the random access preamble may be unable to be appropriately transmitted (for example, if the reduced bandwidth of the terminal 10 (e.g., 20 RB) is smaller than the bandwidth of one RO (e.g., 24 RB)).

Furthermore, as illustrated in the example of Fig. 4, even if the terminal 10 is capable of transmitting one random access preamble, if the BWP preconfigured for the terminal 10 is the reduced bandwidth, the entire plurality of frequency-division multiplexed ROs may not be included in the BWP preconfigured for the terminal 10, and the ROs available for transmitting the random access preamble may be limited.

Since frequency-division multiplexed ROs may be associated with different SSBs, the SSBs available to the terminal 10 may also be limited, so that the location of the terminal 10 at which the terminal can access the cell may be limited.

### (Proposal 1)

A reduced bandwidth of the reduced capability terminal 10 may be any of the following bandwidths from the bandwidth of Option 1 to the bandwidth of Option 4. In a technical specification, one or more bandwidths from among the bandwidth of Option 1 to the bandwidth of Option 4 may be defined, and one of the one or more bandwidths may be the reduced bandwidth of the reduced capability terminal 10. The RB in the following description may be the number of RBs calculated based on the SCS of PUSCH, and may be defined as a value of RBs converted into another SCS, such as the SCS of PRACH.

### (Option 1 of Proposal 1)

The reduced bandwidth may be 24 RBs. Furthermore, the reduced bandwidth may be any bandwidth from 24 RBs to 96 RBs.

For example, in the example illustrated in Fig. 2, a combination of SCS for PRACH (Δf^{RA} for PRACH), SCS of PUSCH (Δf for PUSCH), and the PRACH sequence length (*L_{RA}*) illustrated in Fig. 2 may be used, except for the sequence lengths of PRACH (*L_{RA}*) of 571 and 1151, which are added for NR-U. If the combination of the SCS for PRACH (Δf^{RA} for PRACH), the SCS for PUSCH (Δf for PUSCH), and the sequence length of PRACH (*L_{RA}*) added for the NR-U is available only during the NR-U operation, any combination other than the combinations added for the NR-U among the combinations illustrated in Fig. 2 may be available during the normal NR operation.

### (Option 2 of Proposal 1)

The reduced bandwidth may be 96 RBs. The reduced bandwidth may be a bandwidth that is wider than or equal to 96 RBs.

For example, in the example illustrated in Fig. 2, any combination of the SCS for PRACH (Δf^{RA} for PRACH), the SCS for PUSCH (Δf for PUSCH), and the sequence length of PRACH (*L_{RA}*) illustrated in Fig. 2 may be used, including the PRACH sequence lengths (*L_{RA}*) of 571 and 1151, which are added for NR-U.

By setting the reduced bandwidth to the bandwidth that is wider than or equal to 96 RBs, any combination of SCS for PRACH, SCS for PUSCH, and the PRACH sequence length illustrated in Fig. 2 can be used regardless of whether the operation is the NR-U operation or the normal NR operation.

### (Option 3 of Proposal 1)

The reduced bandwidth may be 20 RBs. The reduced bandwidth may be any bandwidth wider than or equal to 20 RBs and less than 24 RBs.

For example, in the example illustrated in Fig. 2, the combination of the SCS for PRACH, the SCS for PUSCH, and the sequence length of PRACH usable by the reduced capability terminal 10 may be limited to the combinations in which the width of the frequency resource of the NR PRACH is narrower than 24 RBs. By setting the bandwidth part of the downlink of the reduced capability terminal 10 to be wider than or equal to 20 RBs, an SSB (20 RBs) can be received.

### (Option 4 in Proposal 1)

The reduced bandwidth may be 12 RBs. The reduced bandwidth may be any bandwidth wider than or equal to 12 RBs narrower than 20 RBs.

For example, in the example illustrated in Fig. 2, the combinations of the SCS for PRACH, the SCS for PUSCH, and the sequence length of PRACH usable in the reduced capability terminal 10 may be limited to the combinations in which the width of the frequency resources of the NR PRACH is narrower than or equal the reduced bandwidth of 20 RBs. If the downlink bandwidth part of the reduced capability terminal 10 is narrower than or equal to the reduced bandwidth of 20 RBs, the bandwidth on which the SSB is transmitted may be narrower than or equal to a reduced bandwidth that is narrower than 20 RBs.

In Option 1 to Option 4 described above, the reduced bandwidth may be the capability of the terminal 10, and the capability of the terminal 10 may be transmitted from the terminal 10 to the base station 20. The reduced bandwidth may be determined based on the PRACH bandwidth.

In Option 1 to Option 4 described above, the reduced bandwidth may be a common value between the downlink (DL) and the uplink (UL), or may be different values.

In Option 1 to Option 4 described above, the reduced bandwidth of the reduced capability terminal 10 may be a capability common to the downlink (DL) and the uplink (UL). Furthermore, in Option 1 to Option 4, the reduced bandwidth of the reduced capability terminal 10 may be different capabilities in the downlink (DL) and uplink (UL).

### (Proposal 2)

### (Option 1 of Proposal 2)

The reduced capability terminal 10 may configure a UL BWP based on a position of a frequency bandwidth of a RACH occasion selected to transmit a random access preamble.

The reduced capability terminal 10 may configure a UL BWP based on a start position of a frequency bandwidth of a selected RO or a center position of the frequency bandwidth of the selected RO.

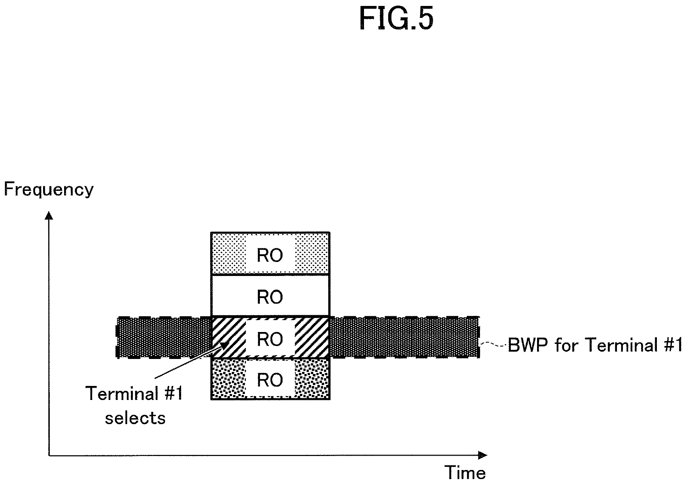

Fig. 5 is a diagram illustrating an example in which the reduced capability terminal 10 configures the UL BWP based on the position of the frequency bandwidth of the selected RO. In the example of Fig. 5, the terminal 10 selects the RO and configures the UL BWP with the bandwidth that is the same as the frequency bandwidth of the selected RO.

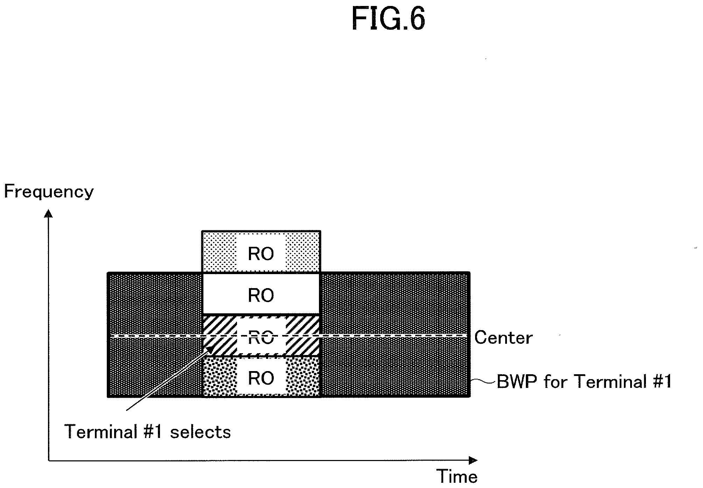

Fig. 6 is a diagram illustrating an example in which the reduced capability terminal 10 configures the UL BWP based on the center position of the frequency bandwidth of the selected RO. In the example of Fig. 6, the terminal 10 selects the RO and configures the UL BWP with the center frequency that is the same as the center position of the frequency bandwidth of the selected RO.

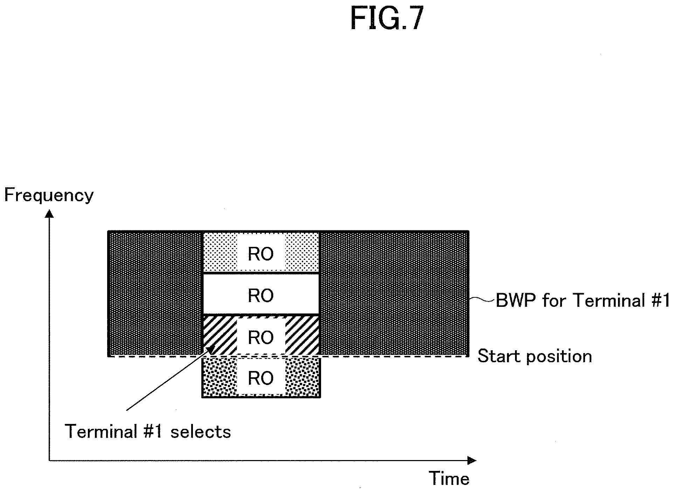

Fig. 7 is a diagram illustrating an example in which the reduced capability terminal 10 configures a UL BWP while using a start position of the frequency bandwidth of the selected RO as a reference. In the example of Fig. 7, the terminal 10 selects the RO and configures the UL BWP with the start position in the frequency direction that is the same as the start position of the frequency bandwidth of the selected RO.

The reduced capability terminal 10 may configure the UL BWP with the reduced bandwidth of the reduced capability terminal 10. For example, a UL BWP with a bandwidth corresponding to the capability of the reduced capability terminal 10 may be configured.

Furthermore, a bandwidth other than the reduced bandwidth of the reduced capability terminal 10 may be specified and/or signalled and the terminal 10 may configure a UL BWP with the specified and/or notified bandwidth. For example, the terminal 10 may configure a UL BWP that has a bandwidth that is the same as the bandwidth of the selected RO. For example, the terminal 10 may configure a UL BWP that has a bandwidth that is the same as the bandwidth of the notified UL BWP.

The reduced capability terminal 10 may also configure an (active) DL BWP based on the position of the frequency bandwidth of the RACH occasion selected to transmit the random access preamble. The reduced capability terminal 10 may configure an (active) DL BWP while using a start position of the frequency bandwidth of the selected RO or a center position of the frequency bandwidth of the selected RO as a reference. For example, the reduced capability terminal 10 may select an RO and configure an (active) DL BWP with a bandwidth that is the same as the frequency bandwidth of the selected RO. The reduced capability terminal 10 may select an RO and configure an (active) DL BWP at a center position that is the same as the center position of the frequency bandwidth of the selected RO. Furthermore, the reduced capability terminal 10 may select an RO and configure an (active) DL BWP at a start position in the frequency position that is the same as the start position of the frequency bandwidth of the selected RO. For example, some or all parameters (e.g., a bandwidth or a frequency position) of the (active) DL BWP may be the same as those of the configured (active) UL BWP.

The base station 20 may preconfigure a UL BWP before the reduced capability terminal 10 selects a RACH occasion to transmit a random access preamble. Alternatively, the base station 20 need not preconfigure a UL BWP before the reduced capability terminal 10 selects a RACH occasion for transmitting a random access preamble. If the base station 20 preconfigures a UL BWP before the reduced capability terminal 10 selects a RACH occasion for transmitting a random access preamble, the reduced capability terminal 10 may apply the bandwidth of the UL BWP preconfigured by the base station 20 as it is, and may adjust the frequency position of the UL BWP in accordance with the position of the frequency bandwidth of the RO selected by the reduced capability terminal 10 (for example, the reduced capability terminal 10 may adjust the frequency position of the UL BWP so that the frequency band of the selected RO is included in the UL BWP). Alternatively, the reduced capability terminal 10 may be adjusted the frequency position of the UL BWP so that a newly configured UL BWP is included in the UL BWP preconfigured by the base station 20.

A time gap or processing time required for switching the BWP (for example, shifting the position of the BWP) by the terminal 10 may be specified between the SSB and the RO (which may be specified in a technical specification, for example). The reason is that switching the BWP requires processing, such as Radio Frequency (RF) tuning in the terminal 10.

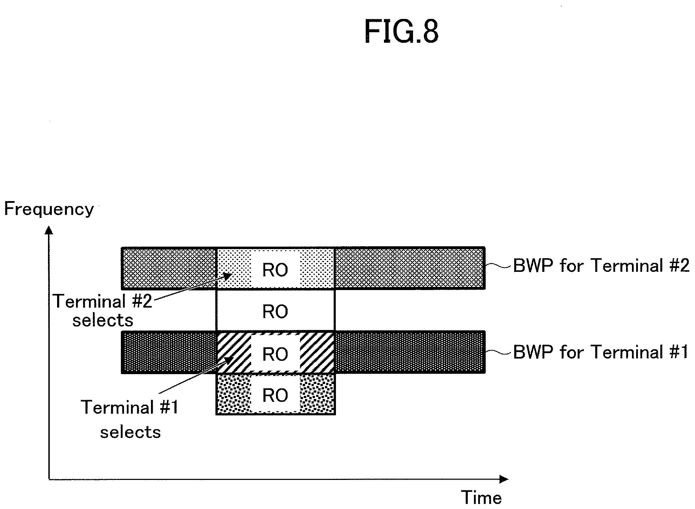

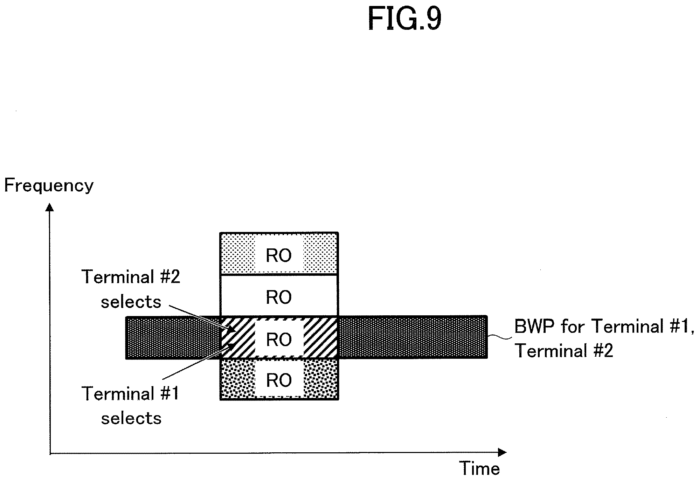

Fig. 8 and Fig. 9 are diagrams illustrating examples in which each terminal 10 of the plurality of reduced capability terminals 10 configures the UL BWP based on the position of the frequency bandwidth of the RACH occasion selected for transmitting the random access preamble. In the example of Fig. 8, the position of the frequency bandwidth of the RO selected by the terminal #1 is different from the position of the frequency bandwidth of the RO selected by the terminal #2. The terminal #1 selects the UL BWP with the position of the frequency bandwidth and the bandwidth that are the same as the position of the frequency bandwidth and the bandwidth of the selected RO. The terminal #2 selects the UL BWP with the position of the frequency bandwidth and the bandwidth that are the same as the position of the frequency bandwidth and the bandwidth of the selected RO. In the example of Fig. 9, the position of the frequency bandwidth of the RO selected by the terminal #1 is the same as the position of the frequency bandwidth of the RO selected by the terminal #2. The terminal #1 and the terminal# 2 configure the UL BWP at the position of the frequency bandwidth and the bandwidth that are the same as the position of the frequency bandwidth and the bandwidth of the selected RO. In this case, if the capability of the terminal #1 differs from the capability of the terminal #2, the bandwidth of the UL BWP configured by the terminal #1 may be different from the bandwidth of the UL BWP configured by the terminal #2.

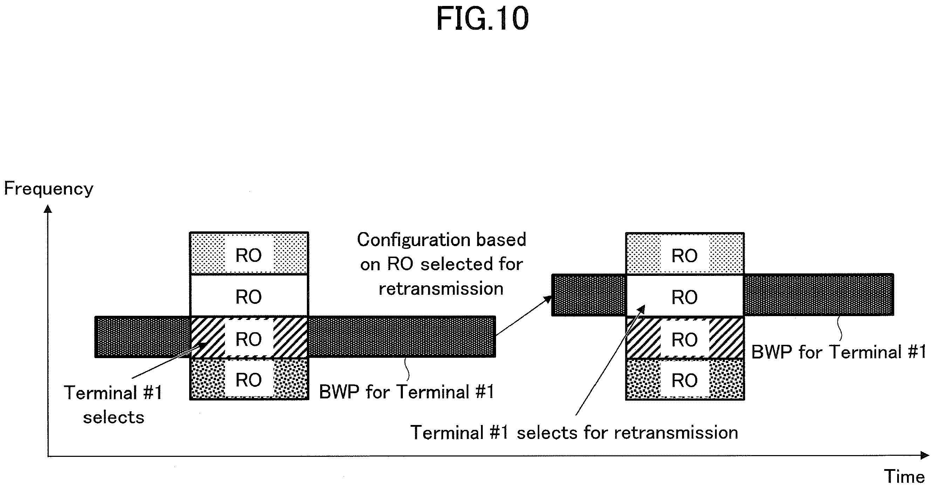

Fig. 10 is a diagram illustrating an example in which the reduced capability terminal 10 retransmits a random access preamble. As illustrated in the example of Fig. 10, if the reduced capability terminal 10 selects, at the time of the retransmission of the random access preamble, an RO that is different from the RO at the time of the initial transmission of the random access preamble, the reduced capability terminal 10 may configure an (active) UL BWP based on the position of the frequency bandwidth of the RO reselected at the retransmission.

### (Supplement to Proposal 2)

The frequency bandwidth configured by "BWP" in the above-described embodiments may be different from the frequency bandwidth configured by the existing BWP. In this case, the name "BWP" in the above-described embodiments may be different from the name of the BWP. For example, the frequency bandwidth configured by "BWP" in the above-described embodiments may be a finer frequency bandwidth, such as that of newly defined within the framework of the existing BWP. The frequency bandwidth configured by "BWP" in the above-described embodiments may be a frequency bandwidth that can be used only within the frequency range of the existing BWP.

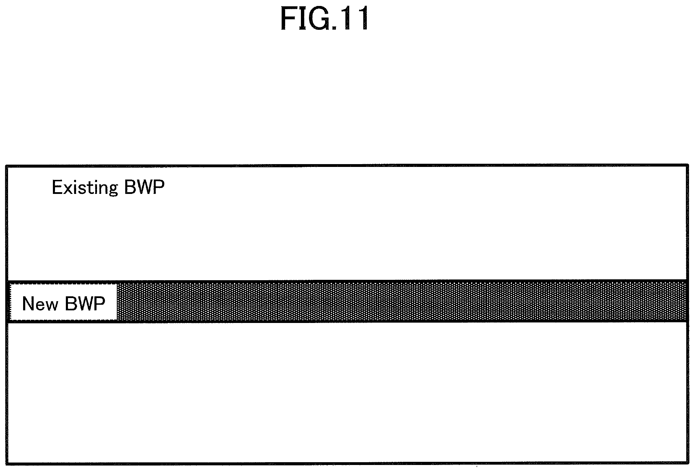

Fig. 11 is a diagram illustrating an example of the frequency bandwidth configured by a new BWP. As illustrated in the example of Fig. 11, the frequency bandwidth configured by the new BWP may be a frequency bandwidth included in the frequency range of the existing BWP.

Furthermore, when the frequency bandwidth configured by "BWP" in the above-described embodiments is the same as the frequency bandwidth configured by the existing BWP, "configure the BWP" may mean replacing some parameters of the currently active BWP that has already been configured, or configuring a new BWP and activating the configured new BWP.

### (Option 2 of Proposal 2)

The reduced capability terminal 10 may be capable of configuring an active UL BWP having a wider bandwidth than the reduced bandwidth of the terminal 10 when transmitting the random access preamble, and may be capable of transmitting the random access preamble within that range. For example, if it is possible to configure a BWP of 20 MHz according to the capability of the reduced capability terminal 10, it may be possible to configure a UL BWP of 100 MHz when transmitting the random access preamble. In this case, the reduced capability terminal 10 may be unable to transmit the random access preamble over the entire 100 MHz UL BWP, but may be able to transmit the random access preamble over the 20 MHz UL BWP included in the 100 MHz bandwidth.

The reduced capability terminal 10 may perform RF tuning as needed each time the reduced capability terminal 10 performs UL transmission. For example, suppose that, in a case where the reduced capability terminal 10 has capability of the frequency bandwidth up to 20 MHz according to the capability of the reduced capability terminal 10, the reduced capability terminal 10 can configure a UL BWP of 100 MHz at a time of transmitting a random access preamble. In this case, for example, each time the random access preamble is transmitted, the reduced capability terminal 10 may set a position to transmit a 20 MHz random access preamble within the 100 MHz UL BWP. For example, a gap, a processing time, or the like required for RF tuning by the reduced capability terminal 10 may be specified (which may be specified in a technical specification, for example).

Until the UL BWP is configured by RRC signalling or the like, the reduced capability terminal 10 may configure an active UL BWP having a wider bandwidth than the reduced bandwidth of the terminal 10 at the time of transmitting the random access preamble, and continue the operation of transmitting the random access preamble within that range according to the capability of its own frequency bandwidth.

If the reduced capability terminal 10 can configure an active UL BWP having a wider bandwidth than the reduced bandwidth of the terminal 10 when transmitting the random access preamble, the reduced capability terminal 10 can configure an active DL BWP having a wider bandwidth than the reduced bandwidth of the terminal 10, also for the DL BWP. If the reduced capability terminal 10 can configure an active UL BWP having a wider bandwidth than the reduced bandwidth of the terminal 10 at a time of transmitting a random access preamble, the reduced capability terminal 10 may configure the DL BWP independently of the configured UL BWP, or may configure the DL BWP in common with the UL BWP.

### (Option 3 of Proposal 2)

The reduced capability terminal 10 does not need to assume configuring the UL BWP or that the UL BWP is configured when transmitting the random access preamble. For example, the reduced capability terminal 10 may transmit the random access preamble in any frequency band of the system frequency band when transmitting the random access preamble.

The reduced capability terminal 10 may perform RF tuning as needed each time the reduced capability terminal 10 performs UL transmission.

For example, a gap, a processing time, or the like required for RF tuning by the reduced capability terminal 10 may be specified (which may be specified by a technical specification, for example).

The reduced capability terminal 10 may continue the operation of not assuming to configure the UL BWP or not assuming that the UL BWP is configured when transmitting the random access preamble, until the UL BWP is configured by RRC signaling or the like.

### (Proposal 3)

### (Option 1 of Proposal 3)

The reduced capability terminal 10 may perform "UL transmission during random access" or "UL transmission until UL BWP is configure by RRC or the like" after the random access preamble transmission within the frequency range of the BWP at the time of random access preamble transmission (which is configured in Proposal 2, for example).

### (Option 2 of Proposal 3)

The reduced capability terminal 10 may perform "UL transmission during random access" or "UL transmission until UL BWP is configured by RRC or the like" after the random access preamble transmission outside the frequency range of the BWP at the time of the random access preamble transmission (which is configured in Proposal 2, for example). In this case, the reduced capability terminal 10 may perform RF tuning as necessary each time UL transmission is performed. For example, a gap, a processing time, or the like required for RF tuning by the reduced capability terminal 10 may be specified (which may be specified by a technical specification).

### (Option 3 of Proposal 3)

The reduced capability terminal 10 may perform "UL transmission during random access" or "UL transmission until UL BWP is configure by RRC or the like" after the random access preamble transmission without assuming to configure a UL BWP or without assuming that UL BWP is configured. In this case, the reduced capability terminal 10 may perform RF tuning as necessary each time UL transmission is performed. For example, a gap, a processing time, or the like required for RF tuning by the reduced capability terminal 10 may be specified (which may be specified by a technical specification).

In Option 1 to Option 3 of Proposal 3, "UL transmission during random access" or "UL transmission until UL BWP is configured by RRC or the like" after the random access preamble transmission may include, for example, Message 3 (Msg3) in the random access procedure, MsgA PUSCH in the two-stage random access procedure, ACK/NACK for DL transmission (Msg2, Msg4, MsgB, or Other DL), and the like.

In Option 1 to Option 3 of Proposal 3, the frequency position, frequency bandwidth, or the like of the DL BWP configured for the reduced capability terminal 10 may be the same as the frequency position, frequency bandwidth, or the like of the UL BWP. The frequency position, frequency bandwidth, or the like of the DL BWP configured for the reduced capability terminal 10 may be configured independently of the frequency position, frequency bandwidth, or the like of the UL BWP.

### (Device Configuration)

Next, a functional configuration example of the terminal 10 and the base station 20 which execute the above-described processing operations is described. The terminal 10 and the base station 20 are provided with all functions described in the embodiments. However, the terminal 10 and the base station 20 may be provided with partial functions among the all functions described in the embodiments. Note that, the terminal 10 and the base station 20 may be collectively referred to as a communication device.

### <Terminal>

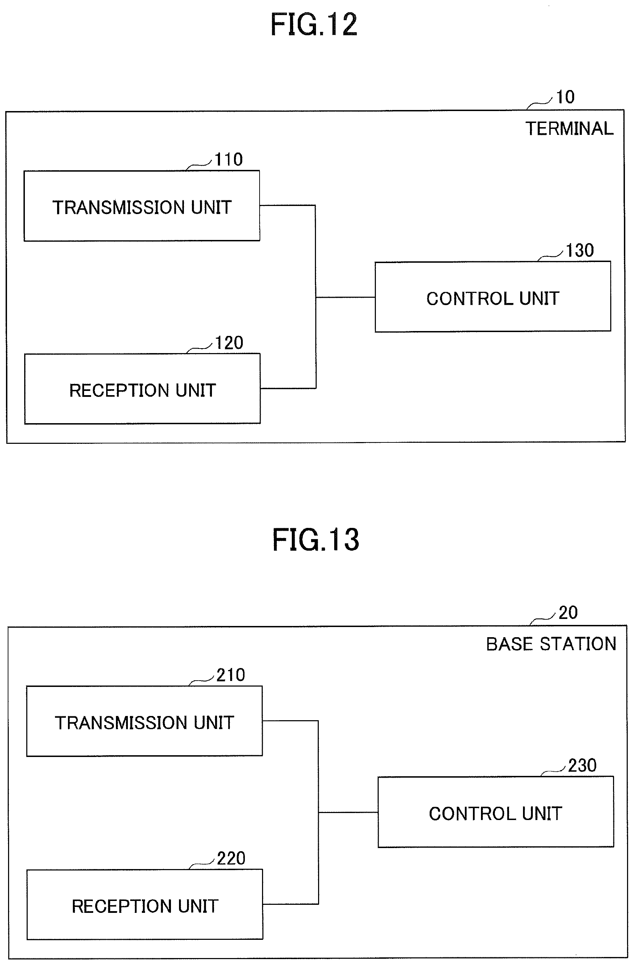

FIG. 12 is a diagram illustrating an example of a functional configuration of the terminal 10. As illustrated in FIG. 12, the terminal 10 includes a transmission unit 110, a reception unit 120, and a control unit 130. The functional configuration illustrated in FIG. 12 is illustrative only. A functional division and the names of the functional units may be any division and name as long as the operation according to the embodiments can be executed. Note that, the transmission unit 110 may be referred to as a transmitter, and the reception unit 120 may be referred to as a receiver.

The transmission unit 110 creates transmission from transmission data, and wirelessly transmits the transmission signal. The transmission unit 110 may form one or a plurality of beams. The reception unit 120 wirelessly receives various signals, and acquires a signal of a higher layer from a received physical layer signal. In addition, the reception unit 120 includes a measurement unit that performs measurement of a signal that is received to obtain received power or the like.

The control unit 130 performs control of the terminal 10. Note that, a function of the control unit 130 which relates to transmission may be included in the transmission unit 110, and a function of the control unit 130 which relates to reception may be included in the reception unit 120.

For example, the control unit 130 of the reduced capability terminal 10 may configure one bandwidth of 12 RBs, 20 RBs, 24 RBs, or 96 RBs as the reduced bandwidth, and the transmission unit 110 of the reduced capability terminal 10 may transmit a random access preamble on the bandwidth selected by the control unit 130.

For example, the control unit 130 of the reduced capability terminal 10 may select an uplink Bandwidth Part (BWP) based on the position of the frequency bandwidth of the random access preamble transmission occasion selected to transmit the random access preamble, and the transmission unit 110 of the reduced capability terminal 10 may transmit the random access preamble on the bandwidth selected by the control unit 130.

### <Base Station 20>

FIG. 13 is a diagram illustrating an example of a functional configuration of the base station 20. As illustrated in FIG. 13, the base station 20 includes a transmission unit 210, a reception unit 220, and a control unit 230. A functional configuration illustrated in FIG. 13 is illustrative only. A functional division and the names of the functional units may be any division and name as long as the operation according to the embodiments can be executed. Note that, the transmission unit 210 may be referred to as a transmitter, and the reception unit 220 may be referred to as a receiver.

The transmission unit 210 includes a function of generating a signal to be transmitted to the terminal 10 side, and wirelessly transmitting the signal. The reception unit 220 includes a function of receiving various signals transmitted from the terminal 10, and acquiring, for example, information of a higher layer from the received signals. In addition, the reception unit 220 includes a measurement unit that performs measurement of a signal that is received to obtain received power or the like.

The control unit 230 performs control of the base station 20. Note that, a function of the control unit 230 which relates to transmission may be included in the transmission unit 210, and a function of the control unit 230 which relates to reception may be included in the reception unit 220.

For example, the reception unit 220 of the base station 20 may receive capability information indicating that the reduced bandwidth of the reduced capability terminal 10 is one bandwidth of 12 RBs, 20 RBs, 24 RBs, or 96 RBs, and the control unit 230 of the base station 20 may configure the bandwidth indicated by the capability information received by the reception unit 220 as the bandwidth for receiving the random access preamble transmitted from the reduced capability terminal 10.

For example, the control unit 230 of the base station 20 may assume that, after the reception unit 220 receives the random access preamble transmitted from the reduced capability terminal 10, UL transmission to the reduced capability terminal 10 until the UL BWP is configured by RRC signaling is performed within the frequency range of the BWP at the time of receiving the random access preamble.

### <Hardware Configuration>

The block diagrams (Fig. 12 and Fig. 13) which are used in description of the embodiments illustrate blocks in a functional unit. The functional blocks (components) are implemented by a combination of hardware and/or software. In addition, means for implementing respective functional blocks is not particularly limited. That is, the respective functional blocks may be implemented by one device in which a plurality of elements are physically and/or logically combined. In addition, two or more devices, which are physically and/or logically separated from each other, may be directly and/or indirectly connected (for example, in a wired manner and/or a wireless manner), and the respective functional blocks may be implemented by a plurality of the devices.

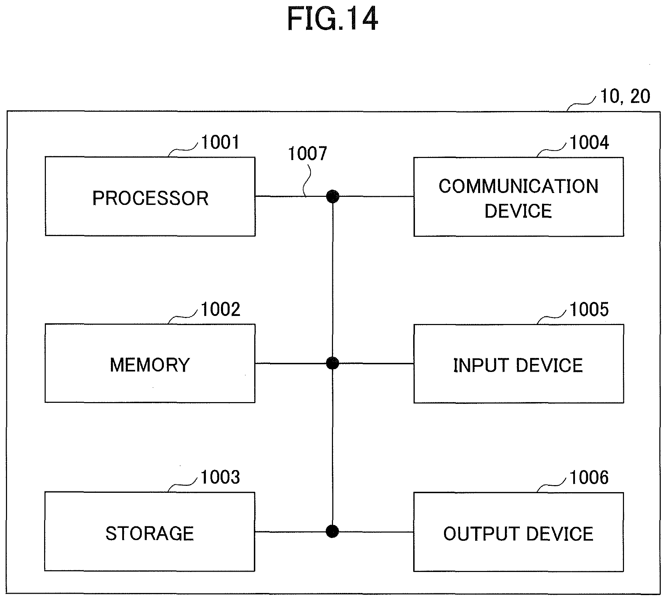

For example, each of the terminal 10 and the base station 20 according to an embodiment of the present invention may function as a computer performing the process according to the embodiments. FIG. 14 is a diagram illustrating an example of a hardware configuration of the terminal 10 and the base station 20 according to the embodiments. Each of the above-described terminal 10 and base station 20 may be physically configured as a computer device including a processor 1001, a memory 1002, an storage 1003, a communication unit 1004, an input unit 1005, an output unit 1006, a bus 1007, and the like.

In the following description, the term "device" can be replaced with a circuit, a device, a unit, or the like. The hardware configuration of the terminal 10 and the base station 20 may include one or more of the devices denoted by 1001-1006 in the figure, or may be configured without some devices.

Each function of the terminal 10 and the base station 20 is implemented by loading predetermined software (program) on hardware, such as the processor 1001 and the memory 1002, so that the processor 1001 performs computation and controls communication by the communication unit 1004, and reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, and the like.

Additionally, the processor 1001 reads a program (program code), a software module, or data from the storage 1003 and/or the communication unit 1004 to the memory 1002, and executes various processes according to these. As the program, a program is used that causes a computer to execute at least a part of the operations described in the above-described embodiments. For example, the transmission unit 110, the reception unit 120, and the control unit 130 of the terminal 10 illustrated in FIG. 12 may be implemented by a control program that is stored in the memory 1002 and that is operated by the processor 1001. Furthermore, for example, the transmission unit 210, the reception unit 220, and the control unit 230 of the base station 20 illustrated in FIG. 13 may be implemented by a control program that is stored in the memory 1002 and that is operated by the processor 1001. While the various processes described above are described as being executed in one processor 1001, they may be executed simultaneously or sequentially by two or more processors 1001. The processor 1001 may be implemented by one or more chips. The program may be transmitted from a network via a telecommunications line.

The memory 1002 is a computer readable storage medium, and, for example, the memory 1002 may be formed of at least one of a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 may store a program (program code), a software module, or the like, which can be executed for implementing the process according to one embodiment of the present invention.

The storage 1003 is a computer readable storage medium and may be formed of, for example, at least one of an optical disk, such as a Compact Disc ROM (CD-ROM), a hard disk drive, a flexible disk, an optical magnetic disk (e.g., a compact disk, a digital versatile disk, a Blu-ray (registered trademark) disk, a smart card, a flash memory (e.g., a card, a stick, a key drive), a floppy (registered trademark) disk, a magnetic strip, and the like. The storage 1003 may be referred to as an auxiliary storage device. The above-described storage medium may be, for example, a database including the memory 1002 and/or the storage 1003, a server, or any other suitable medium.

The communication unit 1004 is hardware (transmitting and receiving device) for performing communication between computers through a wired network and/or a wireless network, and is also referred to, for example, as a network device, a network controller, a network card, a communication module, or the like. For example, the transmission unit 110 and the reception unit 120 of the terminal 10 may be implemented by the communication unit 1004. Furthermore, the transmission unit 210 and the reception unit 220 of the base station 20 may be implemented by the communication unit 1004.

The input unit 1005 is an input device (e.g., a keyboard, a mouse, a microphone, a switch, a button, and/or a sensor) that receives an external input. The output unit 1006 is an output device (e.g., a display, a speaker, and/or an LED lamp) that performs output toward outside. The input unit 1005 and the output unit 1006 may be configured to be integrated (e.g., a touch panel).

Each device, such as the processor 1001 and the memory 1002, is also connected by the bus 1007 for communicating information. The bus 1007 may be formed of a single bus or may be formed of different buses between devices.

The terminal 10 and the base station 20 may each include hardware, such as a microprocessor, a digital signal processor (DSP: Digital Signal Processor), an Application Specific Integrated Circuit (ASIC), a Programmable Logic Device (PLD), and a Field Programmable Gate Array (FPGA), which may implement some or all of each functional block. For example, processor 1001 may be implemented by at least one of these hardware components.

### (Conclusion of the embodiments)

In the specification, at least the terminal and the base station described below are disclosed.

A terminal including a control unit that selects a transmission occasion to transmit a random access preamble and that configures a frequency bandwidth used for transmission or reception by the terminal by using a start position of a frequency bandwidth of the selected transmission occasion or a center position of the frequency bandwidth of the selected transmission occasion as a reference, so that the random access preamble is to be transmitted in the frequency bandwidth of the transmission occasion; and a transmission unit that transmits the random access preamble based on the frequency bandwidth configured by the control unit.

According to the above-described configuration, since the terminal selects a frequency bandwidth used for transmission or reception by the terminal so that the random access preamble can be appropriately transmitted based on the frequency bandwidth of the transmission occasion selected for transmitting the random access preamble, a frequency bandwidth with which the random access preamble is unable to be transmitted can be prevented from being configured.

Capability regarding the frequency bandwidth used for the transmission or the reception by the terminal or capability regarding a reduced bandwidth of the terminal to allow the transmission of the random access preamble in the frequency bandwidth of the transmission occasion may be capability regarding a frequency bandwidth included in a range from a frequency bandwidth of 12 resource blocks to a frequency bandwidth of 96 resource blocks.

According to the above-described configuration, a random access preamble can be transmitted by using any combination of SCS for PRACH (Δf^{RA} for PRACH), SCS for PUSCH (Δf for PUSCH), and a sequence length of PRACH (*L_{RA}*) specified in a technical specification.

After the random access preamble is transmitted, the control unit may apply the frequency bandwidth used for transmission or reception by the terminal, the frequency bandwidth being configured to allow the transmission of the random access preamble in the frequency bandwidth of the transmission occasion, as a frequency bandwidth for an uplink transmission during execution of a random access procedure.

According to the above-described configuration, the frequency bandwidth applied to the uplink transmission until receiving the terminal capability information (UE capability information) transmitted from the terminal is clarified, and the uplink reception operation at the base station until receiving the terminal capability information can be clarified.

When the random access preamble is to be retransmitted after the initial transmission of the random access preamble, the control unit may select a transmission occasion to transmit the random access preamble that differs from the transmission occasion to transmit the random access preamble selected when the random access preamble is initially transmitted, and the control unit may configure a frequency bandwidth used for transmission or reception by the terminal by using, as a reference, a start position or a center position of the frequency bandwidth of the transmission occasion to transmit the random access preamble that differs from the transmission occasion to transmit the random access preamble selected when the random access preamble is initially transmitted, so that the random access preamble is to be retransmitted in a frequency bandwidth of the transmission occasion.

According to the above-described configuration, even if the transmission occasion selected by the terminal at the time of the initial transmission of the random access preamble is different from the transmission occasion selected at the time of the retransmission of the random access preamble, the terminal configures the frequency bandwidth used for transmission or reception by the terminal so that the random access preamble can be appropriately retransmitted based on the frequency bandwidth of the transmission opportunity selected at the time of retransmission, so that the frequency bandwidth with which the random access preamble cannot be transmitted can be prevented from being configured.

A base station including a control unit that configures a frequency bandwidth used for transmission or reception by a terminal by using a start position of a frequency bandwidth of a transmission occasion for the terminal to transmit a random access preamble or a center position of the frequency bandwidth as a reference, so that the random access preamble is to be transmitted in the frequency bandwidth of the transmission occasion; and a reception unit that receives the random access preamble based on the frequency bandwidth configured by the control unit.

According to the above-described configuration, since the terminal selects the frequency bandwidth used for transmission or reception by the terminal so that the random access preamble can be appropriately transmitted based on the frequency bandwidth of the transmission occasion selected for transmitting the random access preamble, a frequency bandwidth with which the random access preamble cannot be transmitted can be prevented from being configured. The base station can configure the frequency bandwidth to be used for transmitting or receiving so that the random access preamble can be appropriately received based on the frequency bandwidth of the transmission occasion selected for transmitting the random access preamble by the terminal.

### (Supplemental embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the present invention, specific numerical value examples are used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the terminal 10 and the base station 20 are described using the functional block diagrams, but such devices may be implemented by hardware, software, or a combination thereof. Software executed by the processor included in the terminal 10 according to the embodiments of the present invention and software executed by the processor included in the base station 20 according to the embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Furthermore, a notification of information is not limited to the aspects or embodiments described in the present specification and may be provided by any other method. For example, the notification of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present specification may be applied to Long Term Evolution (LTE), LTE-advanced (LTE-A), SUPER 3G, IMT-advanced, 4G, 5G, Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), a system using any other appropriate system, and/or next generation systems extended based on these standards.

The processing procedures, the sequences, the flowcharts, and the like of the respective aspects/embodiments described in the present specification may be reversed in order provided that there is no contradiction. For example, the method described in the present specification presents elements of various steps with an exemplary order and is not limited to a presented specific order.

In the present specification, a specific operation to be performed by the base station 20 may be performed by an upper node in some cases. In the network including one or more network nodes including the base station 20, various operations performed for communication with the terminal 10 can be obviously performed by the base station 20 and/or any network node (for example, an MME, an S-GW, or the like is considered, but it is not limited thereto) other than the base station 20. A case is exemplified above in which there is one network node other than the base station 20. The one network node may be a combination of a plurality of other network nodes (e.g., MME and S-GW).

The aspects/embodiments described in this specification may be used alone, in combination, or switched with implementation.

The terminal 10 may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

The base station 20 may be defined by those skilled in the art as a NodeB (NB), enhanced node B (eNB), base station, gNB, or several appropriate terminologies.

A bandwidth part (BWP: Bandwidth Part) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and it is not be assumed that the UE transmits and receives a predetermined signal/channel outside an active BWP. Further, a "cell," a "carrier," or the like in the present disclosure may be replaced with a "BWP."

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology. The numerology may be a communication parameter applied to at least one of transmission and reception of a certain signal or channel. For example, the numerology may indicate at least one of a subcarrier spacing (SCS: SubCarrier Spacing), a bandwidth, a symbol length, a cyclic prefix length, a transmission time interval (TTI: Transmission Time Interval), a number of symbols per TTI, a radio frame configuration, a specific filtering process performed in the frequency domain by a transceiver, a specific windowing process performed in the time domain by a transceiver, and the like. The slot may include one or more symbols (Orthogonal Frequency Division Multiplexing (OFDM) symbols, Single Carrier Frequency Division Multiple Access (SC-FDMA) symbols, or the like) in the time domain. The slot may be a time unit based on the numerology. The slot may include a plurality of mini slots. Each mini slot may include one or more symbols in the time domain. Furthermore, the mini slot may be referred to as a sub-slot. The mini slot may include fewer symbols than a slot. A PDSCH (or PUSCH) transmitted in a unit of time greater than a mini slot may be referred to as a PDSCH (or PUSCH) mapping type A. A PDSCH (or PUSCH) transmitted using a mini slot may be referred to as a PDSCH (or PUSCH) mapping type B. Any one of a radio frame, a subframe, a slot, a mini slot, and a symbol indicates a time unit for transmitting a signal. As a radio frame, a subframe, a slot, a mini slot, and a symbol, different names corresponding to them may be used. For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each terminal) to each terminal in units of TTIs. The definition of the TTI is not limited thereto. The TTI may be a transmission time unit such as a channel coded data packet (transport block), a code block, or a code word, or may be a processing unit such as scheduling or link adaptation. Furthermore, when a TTI is provided, a time interval (for example, the number of symbols) in which a transport block, a code block, a code word, or the like is actually mapped may be shorter than the TTI. When one slot or one mini slot is referred to as a TTI, one or more TTIs (that is, one or more slots or one or more mini slots) may be a minimum time unit of scheduling. Furthermore, the number of slots (the number of mini slots) forming the minimum time unit of scheduling may be controlled. A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like. Furthermore, a long TTI (for example, a normal TTI, a subframe, or the like) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology. Furthermore, a time domain of an RB may include one or more symbols and may be a length of one slot, one mini slot, one subframe, or one TTI. One TTI, one subframe, or the like may be formed of one or more resource blocks. Furthermore, one or more RBs may be referred to as a physical resource block (PRB: Physical RB), a sub carrier group (SCG: Sub-Carrier Group), a resource element group (REG: Resource Element Group), a PRB pair, an RB pair, or the like. Furthermore, the resource block may be formed of one or more resource elements (RE: Resource Element). For example, one RE may be a radio resource region of one subcarrier and one symbol.

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The description "based on" in this specification does not represent "only based on" unless otherwise stated. In other words, description of "based on" represents both "only based on" and "at least based on."

In this specification or the appended claims, in a case where "include," "including," and a modification thereof are used, these terms are intended as comprehensive terms similar to "comprising." In addition, a term "or" that is used in this specification and the appended claims is not intended as an exclusive OR.

In the entire present disclosure, for example, when an article such as "a," "an," and "the" in English is added by a translation, the article may include multiple things, unless the context explicitly indicates that the article does not include the multiple things.

Although the present invention is described above in detail, it is obvious to those skilled in the art that the present invention is not limited to the embodiments described in the specification. The present invention may be implemented as revised and modified embodiments without departing from the gist and scope of the present invention as set forth in claims. Accordingly, the description of the specification is for the purpose of illustration and does not have any restrictive meaning to the present invention.

### LIST OF REFERENCE SYMBOLS

- 10: terminal
- 110: transmission unit
- 120: reception unit
- 130: control unit
- 20: base station
- 210: transmission unit
- 220: reception unit
- 230: control unit
- 1001: processor
- 1002: memory
- 1003: storage
- 1004: communication device
- 1005: input device
- 1006: output device

## Claims

1. A terminal comprising:
a control unit that selects a transmission occasion to transmit a random access preamble and that configures a frequency bandwidth used for transmission or reception by the terminal by using a start position of a frequency bandwidth of the selected transmission occasion or a center position of the frequency bandwidth of the selected transmission occasion as a reference, so that the random access preamble is to be transmitted in the frequency bandwidth of the transmission occasion; and
a transmission unit that transmits the random access preamble based on the frequency bandwidth configured by the control unit.

2. The terminal according to claim 1, wherein capability regarding the frequency bandwidth used for the transmission or the reception by the terminal or capability regarding a reduced bandwidth of the terminal to allow the transmission of the random access preamble in the frequency bandwidth of the transmission occasion is capability regarding a frequency bandwidth included in a range from a frequency bandwidth of 12 resource blocks to a frequency bandwidth of 96 resource blocks.

3. The terminal according to claim 1, wherein, after the random access preamble is transmitted, the control unit applies the frequency bandwidth used for transmission or reception by the terminal, the frequency bandwidth being configured to allow the transmission of the random access preamble in the frequency bandwidth of the transmission occasion, as a frequency bandwidth for an uplink transmission during execution of a random access procedure.

4. The terminal according to claim 1, wherein, when the random access preamble is to be retransmitted after the initial transmission of the random access preamble, the control unit selects a transmission occasion to transmit the random access preamble that differs from the transmission occasion to transmit the random access preamble selected when the random access preamble is initially transmitted, and the control unit configures a frequency bandwidth used for transmission or reception by the terminal by using, as a reference, a start position or a center position of the frequency bandwidth of the transmission occasion to transmit the random access preamble that differs from the transmission occasion to transmit the random access preamble selected when the random access preamble is initially transmitted, so that the random access preamble is to be retransmitted in a frequency bandwidth of the transmission occasion.

5. A base station comprising:
a control unit that configures a frequency bandwidth used for transmission or reception by a terminal by using a start position of a frequency bandwidth of a transmission occasion for the terminal to transmit a random access preamble or a center position of the frequency bandwidth as a reference, so that the random access preamble is to be transmitted in the frequency bandwidth of the transmission occasion; and
a reception unit that receives the random access preamble based on the frequency bandwidth configured by the control unit.
